# EUROPEAN PATENT APPLICATION

(11) **EP 4 819 220 A1**
(43) Date of publication of application: **07.10.2026**
(21) Application number: 24895920.7
(22) Date of filing: 19.09.2024
(51) Int. Cl.: H01M 4/133, H01M 4/139

(54) **NEGATIVE ELECTRODE SHEET, PREPARATION METHOD THEREFOR, BATTERY CELL AND ELECTRICAL DEVICE**

(30) Priority: 30.11.2023 CN 202311632169
(71) Applicant: BYD Company Limited, Shenzhen, Guangdong 518118 (CN)
(72) Inventor: YUAN, Xiaotao, Shenzhen, Guangdong 518118 (CN); HE, Kefeng, Shenzhen, Guangdong 518118 (CN); LEI, Yu, Shenzhen, Guangdong 518118 (CN); ZHANG, Zhipeng, Shenzhen, Guangdong 518118 (CN); HE, Junwu, Shenzhen, Guangdong 518118 (CN)
(74) Representative: Mathys & Squire
(86) International application number: PCT/CN2024/119610
(87) International publication number: WO 2025/112822

(57) **Abstract**

A negative electrode sheet, a preparation method therefor, a battery cell and an electrical device. The negative electrode sheet comprises a current collector and an active layer, the active layer containing graphite which satisfies: 0 < OIₐ ≤ 5, 2 ≤ OI_{b} ≤ 20, where OIₐ is the ratio of a peak area of a characteristic diffraction peak of a graphite (004) surface to the peak area of a characteristic diffraction peak of a graphite (110) surface obtained by an XRD test on the surface of the negative electrode sheet, and OI_{b} is the ratio of a peak area of a characteristic diffraction peak of the graphite (004) surface to the peak area of a characteristic diffraction peak of the graphite (110) surface obtained by an XRD test on a cross section of the negative electrode sheet.

## Description

This application claims priority to Chinese Patent Application No. 202311632169.4, filed with the China National Intellectual Property Administration on November 30, 2023 and entitled "NEGATIVE ELECTRODE SHEET AND PREPARATION METHOD THEREFOR, BATTERY CELL, AND ELECTRICAL DEVICE", which is incorporated herein by reference in its entirety.

### TECHNICAL FIELD

This application relates to the field of battery technologies, and specifically, to a negative electrode sheet and a preparation method therefor, a battery cell, and an electrical device.

### BACKGROUND

Energy density of a battery directly affects the range of an electrical device. Increasing areal density and compaction of an electrode, allowing for a higher volume percentage of active material within a limited space, is an effective way to increase the energy density of the battery.

However, increased areal density and compaction of the electrode lead to a longer diffusion path for lithium ions. In addition, decreased porosity and increased tortuosity reduce the effective diffusion coefficient of the ions, ultimately resulting in a decrease in liquid-phase diffusion impedance of the battery, which affects power performance of the battery and makes it difficult to meet fast charge requirements.

### SUMMARY

An objective of this application is to provide a negative electrode sheet and a preparation method therefor, a battery cell, and an electrical device that can improve a liquid-phase lithium-ion diffusion capability of an electrode, thereby improving kinetic performance and fast-charging performance of a thick electrode.

To implement the objective of this application, this application provides technical solutions as follows.

According to a first aspect, this application provides a negative electrode sheet, including a current collector and an active layer, the active layer being stacked on the current collector, the active layer containing graphite, and the graphite satisfying: 0 < OIₐ ≤ 5, 2 ≤ OI_{b} ≤ 20, where OIₐ is a ratio of a peak area of a characteristic diffraction peak of a (004) plane of the graphite to a peak area of a characteristic diffraction peak of a (110) plane of the graphite obtained by performing an XRD test on a surface of the negative electrode sheet, and OI_{b} is a ratio of a peak area of a characteristic diffraction peak of the (004) plane of the graphite to a peak area of a characteristic diffraction peak of the (110) plane of the graphite obtained by performing an XRD test on a cross section of the negative electrode sheet.

In an implementation, the graphite meets: 0 < OIₐ ≤ 2, 2 ≤ OI_{b} ≤ 10.

According to a second aspect, this application further provides a preparation method for a negative electrode sheet, including: providing a current collector; stacking an active layer on the current collector, the active layer containing graphite, and the graphite satisfying: 0 < OIₐ ≤ 5, 2 ≤ OI_{b} ≤ 20, where OIₐ is a ratio of a peak area of a characteristic diffraction peak of a (004) plane of the graphite to a peak area of a characteristic diffraction peak of a (110) plane of the graphite obtained by performing an XRD test on a surface of the negative electrode sheet, and OI_{b} is a ratio of a peak area of a characteristic diffraction peak of the (004) plane of the graphite to a peak area of a characteristic diffraction peak of the (110) plane of the graphite obtained by performing an XRD test on a cross section of the negative electrode sheet.

In an implementation, stacking the active layer on the current collector includes: coating the current collector with slurry, the slurry including graphite particles; applying an alternating electric field to the negative electrode sheet to induce a current in the active layer; and/or, applying a magnetic field to the negative electrode sheet to orient the graphite particles.

In an implementation, a voltage of the alternating electric field is U and frequency is F, satisfying: 0 V < U ≤ 400 V, 30 Hz ≤ F ≤ 150 Hz.

In an implementation, the voltage of the alternating electric field is U and the frequency is F, satisfying: 24 V ≤ U ≤ 130 V, 50 Hz ≤ F ≤ 100 Hz.

In an implementation, a magnitude of the magnetic field is B, satisfying: 0 T < B ≤ 2 T.

In an implementation, the magnitude of the magnetic field is B, satisfying: 0.6 T ≤ B ≤ 1.2 T.

In an implementation, applying the magnetic field to the negative electrode sheet further includes: the magnetic field is a square magnetic field, and a direction of the magnetic field forms a first included angle θ₁ with a thickness direction of the negative electrode sheet; and/or, the magnetic field is a cylindrical magnetic field, and a direction of the magnetic field forms a second included angle θ₂ with a length direction of the negative electrode sheet, satisfying: 45° ≤ θ₁ ≤ 90°, 45° ≤ θ₂ ≤ 80°.

In an implementation, after applying the magnetic field to the negative electrode sheet, the method further includes: baking the negative electrode sheet at a baking temperature of T, satisfying: 80°C ≤ T ≤ 140°C.

In an implementation, areal density of the negative electrode sheet is C, and compaction density of the negative electrode sheet is D, satisfying: 140 g/m² ≤ C ≤ 300 g/m², 1.1 g/cm³ ≤ D ≤ 1.8 g/cm³.

According to a third aspect, this application further provides a battery cell, including a separator, a positive electrode sheet, and the negative electrode sheet according to any one of various implementations of the first aspect or a negative electrode sheet prepared by the preparation method for a negative electrode sheet according to any one of various implementations of the second aspect, the positive electrode sheet, the separator, and the negative electrode sheet being stacked.

According to a fourth aspect, this application further provides a battery, including the battery cell according to the third aspect.

In an implementation, the battery further includes a housing, the housing including a bottom plate and a plurality of side plates, the side plates being connected to the bottom plate and enclosing an accommodating cavity, the accommodating cavity having an opening at one end opposite to the bottom plate, and the battery cell being accommodated in the accommodating cavity.

In an implementation, the battery further includes a cover plate, the cover plate being connected to the opening of the housing, thereby closing the accommodating cavity.

According to a fifth aspect, this application further provides an electrical device, including the battery cell according to the third aspect.

By regulating the orientation of the graphite in the active layer, a liquid-phase lithium-ion diffusion capability of an electrode can be improved, thereby improving kinetic performance and fast-charging performance of a thick electrode.

### DESCRIPTION OF DRAWINGS

To more clearly describe technical solutions in implementations of this application or conventional technologies, the drawings used in the description of the implementations or the conventional technologies are briefly introduced below. Obviously, the drawings described below are only some implementations of this application. For a person of ordinary skill in the art, other drawings can be obtained from these drawings without creative efforts.
FIG. 1 is a diagram of an electrode sheet according to an embodiment;
FIG. 2 is a diagram of applying an electric field and a magnetic field according to an embodiment;
FIG. 3 is a diagram of applying different magnetic fields according to an embodiment;
FIG. 4 is a flowchart of a preparation process for a negative electrode sheet according to an embodiment; and
FIG. 5 is a flowchart of a process for preparing an active layer according to an embodiment.

Reference numerals:
100 - negative electrode sheet;
10 - current collector; 20 - active layer; 30 - graphite particle;
B1 - square magnetic field; B2 - cylindrical magnetic field.

### DETAILED DESCRIPTION OF EMBODIMENTS

The following clearly and completely describes the technical solutions in implementations of this application with reference to the accompanying drawings in implementations of this application. It is clear that the described implementations are merely some but not all of implementations of this application. All other implementations obtained by a person of ordinary skill in the art based on the implementations of this application without creative efforts shall fall within the protection scope of this application.

It will be noted that when an assembly is referred to as "fixed" to another assembly, the assembly may be directly on the other assembly or there may be an assembly therebetween. When an assembly is considered to be "connected" to another assembly, the assembly may be directly connected to the other assembly or there may be an intermediate assembly at the same time.

Unless otherwise defined, all technical and scientific terms used in this application have the same meanings as commonly understood by a person of ordinary skill in the art to which this application belongs. Terms used in the specification of this application are only for the objective of describing specific embodiments and are not intended to limit this application. The term "and/or" as used in this application includes any and all combinations of one or more related listed items.

The following describes in detail some implementations of this application with reference to accompanying drawings. In the absence of conflict, the following embodiments and features within the embodiments may be combined with each other.

Embodiments of this application provide an electrical device, including a battery cell according to the embodiments of this application. This electrical device may be an electric vehicle, a hybrid electric vehicle, a base station, a household electrical load, or the like.

The electrical device uses a battery, including the battery cell according to the embodiments of this application. The battery may be a prismatic laminated battery, an energy storage battery, or the like.

The battery further includes a housing, the housing including a bottom plate and a plurality of side plates, the side plates being connected to the bottom plate and defining an accommodating cavity. The accommodating cavity has an opening at one end opposite to the bottom plate, and the battery cell is accommodated in the accommodating cavity.

The material of the housing is similar to that of the foregoing battery pack housing. For details, reference may be made to the foregoing description, which will not be described again.

Optionally, the housing may be an integrated structure, that is, the bottom plate and the side plates are formed as an integrated structure using an integrated molding process. Specifically, the integrated molding process may be stamping, casting, or the like, with no limitation thereto. The housing may alternatively be a separate structure, with the side plates and the bottom plate connected and fixed by welding, bonding, snap-fitting, screwing, or the like. A wall thickness of the housing may be roughly uniform throughout, that is, thicknesses of the side plates may be roughly consistent, and thicknesses of the bottom plate and side plates may also be roughly the same.

The battery further includes a cover plate, the cover plate being connected to the opening of the housing, thereby closing the accommodating cavity. The cover plate may be connected to the housing by welding, bonding, snap-fitting, screwing, or the like, with no limitation thereto. The shape of the cover plate may be roughly the same as that of the bottom plate.

The battery uses the battery cell according to the embodiments of this application, which can effectively improve a liquid-phase diffusion rate of lithium ions and improve battery performance.

The embodiments of this application further provide a battery cell, including a separator, a positive electrode sheet, and the negative electrode sheet according to the embodiments of this application. The positive electrode sheet, the separator, and the negative electrode sheet are sequentially stacked.

Optionally, the positive electrode sheet includes a positive current collector, and the positive current collector has a positive active layer. The positive active layer includes components such as a positive electrode material, a conductive agent, and a binder. This application does not specifically limit these materials, and appropriate materials can be selected according to actual application requirements. The positive current collector includes, but is not limited to, aluminum foil. The positive electrode active material may be a phosphate positive electrode active material or a ternary positive electrode active material. In specific embodiments, the positive electrode active material includes one or more of lithium cobalt oxide, lithium manganese oxide, lithium iron phosphate, lithium manganese iron phosphate, lithium vanadium phosphate, lithium vanadium oxide phosphate, lithium fluorinated vanadium phosphate, lithium titanate, lithium nickel cobalt manganese oxide, and lithium nickel cobalt aluminum oxide. The conductive agent includes one or more of graphite, carbon black, acetylene black, graphene, carbon fiber, C60, and carbon nanotubes. The binder includes one or more of polyvinylidene chloride, soluble polytetrafluoroethylene, styrene-butadiene rubber, hydroxypropyl methylcellulose, methylcellulose, carboxymethylcellulose, polyvinyl alcohol, acrylonitrile copolymer, sodium alginate, chitosan and chitosan derivatives, with no specific limitation thereto.

Optionally, the separator may be selected according to actual requirements. For example, the separator may be a polyethylene film, a polypropylene film, a polyvinylidene fluoride film, or non-woven fabric. In addition, the separator may have different coatings, such as alumina coating, boehmite coating, PVDF coating, or the like, with no limitation thereto.

The battery cell uses the negative electrode sheet according to the embodiments of this application, which can improve a liquid-phase lithium-ion diffusion capability of an electrode, thereby improving kinetic performance and fast-charging performance of a thick electrode.

The negative electrode sheet according to the embodiments of this application is described in detail below.

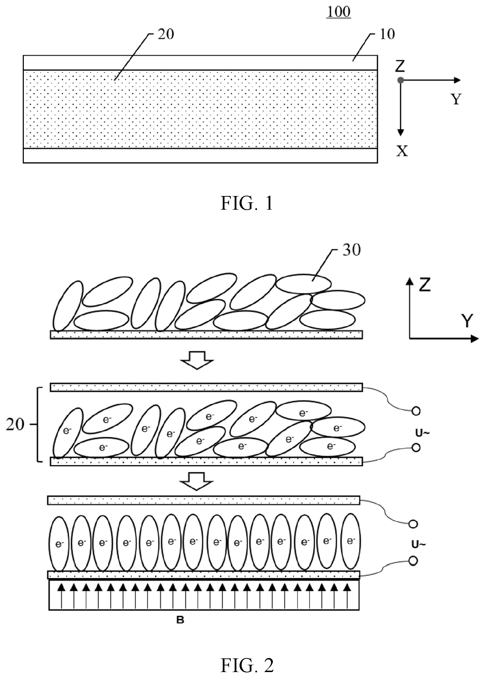

An embodiment of this application provides a negative electrode sheet 100, as shown in FIG. 1, including a current collector 10 and an active layer 20. The active layer 20 is stacked on at least one side of the current collector 10, and the active layer 20 contains graphite.

First, directions are defined. Reference is made to FIG. 1. A width direction of the negative electrode sheet 100 is an X direction, a length direction of the negative electrode sheet 100 is a Y direction, and a thickness direction of the negative electrode sheet 100 is a Z direction.

Optionally, the active layer 20 is coated in the length direction Y.

The graphite meets: 0 < OIₐ ≤ 5, 2 ≤ OI_{b} ≤ 20.

OIₐ is a ratio of a peak area of a characteristic diffraction peak of a (004) plane of the graphite to a peak area of a characteristic diffraction peak of a (110) plane of the graphite obtained by performing an XRD test on a surface of the negative electrode sheet 100, and OI_{b} is a ratio of a peak area of a characteristic diffraction peak of the (004) plane of the graphite to a peak area of a characteristic diffraction peak of the (110) plane of the graphite obtained by performing an XRD test on a cross section of the negative electrode sheet 100.

In this application, OI represents an orientation of the graphite in the electrode. After the graphite is made into the electrode sheet, an arrangement direction (orientation) of a layered graphite structure significantly affects migration of lithium ions. Ideally, when the graphite layer structure is completely perpendicular to a plane of the electrode sheet, a path for the lithium ions to be intercalated into the negative electrode sheet 100 can be ensured to be short enough, which is most favorable for diffusion of the lithium ions, thereby reducing problems of lithium plating and poor cycle performance caused by an excessively long lithium intercalating path. However, this perpendicularity is difficult to implement in actual preparation, and typically, only the orientation of the graphite electrode can be controlled within a specific range.

X-ray diffraction can be used to test the orientation of the graphite electrode, with a principle as follows. When a horizontally placed sample of the negative electrode sheet 100 is subjected to a diffraction pattern test (with a test surface parallel to the X direction and the Y direction), diffraction peaks on the graphite (004) plane and the graphite (110) plane can be obtained. Stronger intensity of the peak of (004) indicates that more particles on a crystal plane of (004) are parallel to the current collector 10 of the negative electrode sheet 100. The orientation of the graphite can be measured by a ratio OIₐ of diffraction peak intensity (or integral area) of the crystal plane of (004) to diffraction peak intensity (or integral area) of the crystal plane of (110). The larger the OIₐ, the higher the orientation, indicating that more graphite particles 30 are arranged in the layered structure parallel to the current collector 10.

A test principle for a cross section OI_{b} is similar to the foregoing, and the test is performed using a way of stacking electrode sheets in multiple layers. After a plurality of negative electrode sheets 100 are stacked in the Z direction, the test surface is parallel to the Y direction and the Z direction, ensuring that the active layer 20 is exposed. The cross section OI_{b} is also a ratio of the diffraction peak intensity (or integrated area) of the crystal plane of (004) to that of crystal plane of (110). If the value of the cross-sectional OI_{b} is excessively large, expansion of the graphite mainly occurs in the X direction. If the value of the cross-sectional OI_{b} is excessively small, expansion mainly occurs in the Y direction. In both cases, expansion stress is excessively concentrated, which is not conducive to long-cycle performance of the graphite electrode sheet and may cause material shedding during cycling, leading to capacity decay.

It will be understood that in the negative electrode sheet 100 of this application, the active layer 20 includes not only the negative electrode active material graphite, but also a conductive agent and a binder. The conductive agent and the binder can be selected according to requirements. For example, the conductive agent may be conductive carbon black (SP), carbon nanotubes (CNT), acetylene black, graphene, Ketjen black, carbon nanofibers, or the like; and the binder may be polyacrylonitrile, polyvinylidene fluoride (PVDF), polyvinyl alcohol, sodium carboxymethyl cellulose (CMC), polymethacrylamide, polyacrylic acid, sodium polyacrylate, polyacrylamide, polyamide, polyimide, polyacrylate, styrene-butadiene rubber (SBR), sodium alginate, chitosan, polyethylene glycol, guar gum, or the like, with no limitation thereto.

Commonly used positive and negative electrode active materials in lithium-ion batteries, such as lithium iron phosphate, lithium nickel cobalt manganese oxide, and graphite, have specific active surfaces for lithium-ion intercalation. An energy barrier to be overcome for lithium-ion intercalation along these directions is minimal. By regulating the orientation of the material, a lithium intercalation direction can be aligned with a diffusion direction of the lithium ions during battery charging and discharging, which is conducive to reducing battery impedance.

On the other hand, under existing electrode preparation processes, accumulation of active material particles is usually disordered, resulting in a large overall tortuosity of the electrode and a long lithium-ion diffusion path. By regulating the particle orientation, the tortuosity of the electrode can be significantly reduced, thereby improving the diffusion capability of the lithium ions in internal channels of the electrode.

Therefore, researching how to reduce tortuosity is of great significance for electrode systems with high areal density and high compaction. According to this application, by regulating the tortuosity of the electrode, an angle between a lithium intercalation surface of the electrode and the current collector 10 can be regulated, shortening a diffusion path of the lithium ions in the electrode.

The negative electrode sheet 100 according to this embodiment of this application includes the current collector 10 and the active layer 20, and the active layer 20 contains graphite. By regulating the orientation of the graphite in the active layer 20, a liquid-phase lithium-ion diffusion capability of an electrode can be improved, thereby improving kinetic performance and fast-charging performance of a thick electrode.

Optionally, the graphite meets: 0 < OIₐ ≤ 2, 2 ≤ OI_{b} ≤ 10.

Optionally, the value of OIₐ may be 0.8, 1, 1.2, 1.3, or the like, and the value of OI_{b} may be 4, 4.8, 5.6, 6.2, or the like, with no specific limitation thereto.

By regulating the orientation of the graphite, the values of the planar OIₐ and the cross-sectional OI_{b} both meet the foregoing ranges, so that the liquid-phase lithium-ion diffusion capability of the electrode can be improved, thereby improving the kinetic performance and the fast-charging performance of the thick electrode.

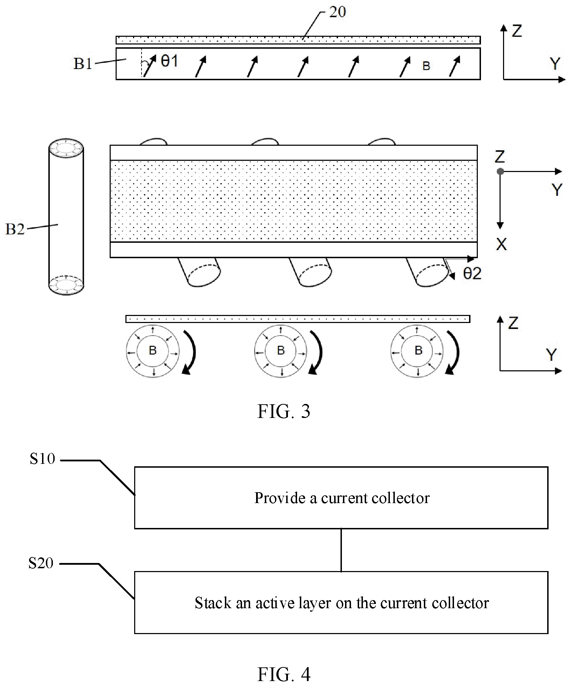

Embodiments of this application further provide a preparation method for a negative electrode sheet 100. Reference is made to FIG. 4. The preparation method includes the following steps.

S10: provide a current collector 10.

S20: stack an active layer 20 on the current collector 10.

Specifically, the active layer 20 contains graphite, and the graphite meets: 0 < OIₐ ≤ 5, 2 ≤ OI_{b} ≤ 20.

OIₐ is a ratio of a peak area of a characteristic diffraction peak of a (004) plane of the graphite to a peak area of a characteristic diffraction peak of a (110) plane of the graphite obtained by performing an XRD test on a surface of the negative electrode sheet 100, and OI_{b} is a ratio of a peak area of a characteristic diffraction peak of the (004) plane of the graphite to a peak area of a characteristic diffraction peak of the (110) plane of the graphite obtained by performing an XRD test on a cross section of the negative electrode sheet 100.

The negative electrode sheet 100 is provided. The negative electrode sheet 100 includes the current collector 10 and the active layer 20 stacked together. The active layer 20 contains the graphite. Therefore, by regulating the orientation of the graphite in the active layer 20, a liquid-phase lithium-ion diffusion capability of an electrode can be improved, thereby improving kinetic performance and fast-charging performance of a thick electrode.

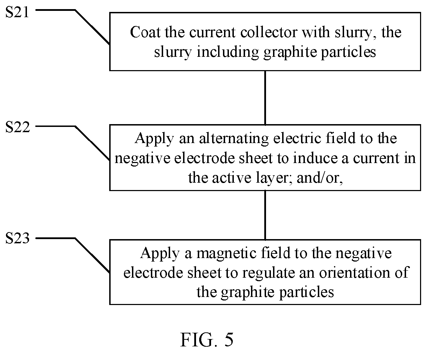

Optionally, stacking the active layer 20 on the current collector 10, referring to FIG. 5, specifically includes the following steps.

S21: coat the current collector 10 with slurry, the slurry including graphite particles 30.

S22: apply an alternating electric field to the negative electrode sheet 100 to induce a current in the active layer 20.

S23: apply a magnetic field to the negative electrode sheet 100 to regulate an orientation of the graphite particles 30.

Optionally, the current collector 10 may be made of copper foil or the like, with no specific limitation thereto.

Optionally, the slurry may include materials such as graphite, a conductive agent, a binder, a stabilizer, and water. For types of the conductive agent and the binder, reference may be made to the foregoing, and will not be described again.

Optionally, by stacking the active layer 20 on the current collector 10, an alternating electric field can be applied only to the negative electrode sheet 100 to induce the current in the active layer 20. Alternatively, a magnetic field can be applied only to the negative electrode sheet 100. Alternatively, an alternating electric field can be applied to the negative electrode sheet 100 and a magnetic field can be applied to the negative electrode sheet 100. All of the foregoing manners are acceptable, with no specific limitation thereto.

Optionally, as shown in FIG. 2, the slurry is coated on the current collector 10 using a continuous coating device. After coating, the graphite particles 30 can be arranged randomly or regularly, with no specific limitation thereto. Applying the alternating electric field in step S22 can induce the current in the graphite particles 30 in the electrode sheet. A direction of the induced current is parallel to a layered structure of the graphite particles 30 (parallel to the Y direction). Then, by applying the magnetic field in step S23, the graphite particles 30 is stressed and oriented.

By applying the alternating electric field and the magnetic field to the negative electrode sheet 100, the graphite particles 30 in the active layer 20 can be regulated from a random arrangement to a directional arrangement. This can reduce the tortuosity of the electrode, improve the diffusion capability of lithium ions in internal channels of the electrode, and furthermore reduce an angle between a lithium intercalation channel and a diffusion direction of the lithium ions, thereby improving kinetic performance of the electrode.

Optionally, applying the alternating electric field to the negative electrode sheet 100 includes: a voltage of the alternating electric field is U and frequency is F, satisfying: 0 V < U ≤ 400 V, 30 Hz ≤ F ≤ 150 Hz.

Optionally, a voltage range of an alternating battery is 24V ≤ U ≤ 130V, 50Hz ≤ F ≤ 100Hz. Specifically, the voltage may be 36 V, 48 V, 100 V, or the like, and the frequency may be 50 Hz, 70 Hz, 90 Hz, or the like, with no limitation thereto.

By applying the alternating electric field with appropriate voltage and frequency to the negative electrode sheet 100, where the magnitude and frequency of the alternating electric field meet the foregoing range, the induced current is generated in the graphite in the electrode sheet.

Optionally, applying the magnetic field to the negative electrode sheet 100 includes: a magnitude of the magnetic field is B, satisfying:0 T < B ≤ 2 T.

Optionally, the magnitude of the magnetic field is 0.6 T ≤ B ≤ 1.2 T. Specifically, the magnitude of the magnetic field may be 0.6 T, 0.8 T, 1.0 T, 1.2 T, or the like, with no limitation thereto.

By applying the magnetic field with the magnitude satisfying the foregoing range to the negative electrode sheet 100, the graphite particles 30 in the active layer 20 can be regulated from a random arrangement to a directional arrangement. This can reduce the tortuosity of the electrode, improve the diffusion capability of lithium ions in internal channels of the electrode, and furthermore reduce an angle between a lithium intercalation channel and a diffusion direction of the lithium ions, thereby improving kinetic performance of the electrode.

Optionally, as shown in FIG. 3, applying the magnetic field to the negative electrode sheet 100 further includes: the magnetic field is a square magnetic field B1, a direction of the magnetic field forms a first included angle θ₁ with the Z direction of the negative electrode sheet 100; and/or,
the magnetic field is a cylindrical magnetic field B2, and a direction of the magnetic field forms a second included angle θ₂ with the Y direction of the negative electrode sheet 100, satisfying: 45° ≤ θ₁ ≤ 90°, 45° ≤ θ₂ ≤ 80°.

Optionally, the square magnetic field B1 is used to adjust an included angle between the graphite particles 30 and the Z direction. The first included angle θ₁ between the square magnetic field B1 and the negative electrode sheet 100 in the Z direction meets 60°≤θ₁≤90°. Specifically, the first included angle θ₁ may be 60°, 70°, 80°, 90°, or the like, with no limitation thereto.

Optionally, the value of planar OIₐ depends on the first included angle θ₁. Adjusting the first included angle θ₁ may affect the tortuosity of the electrode, thereby affecting the liquid-phase diffusion capability of the lithium ions in the electrode.

Optionally, as shown in FIG. 3, the cylindrical magnetic field B2 is used to adjust an included angle between the graphite particles 30 and the Y direction. The cylindrical magnetic field B2 can rotate around an axis, and the axis forms a second included angle θ₂ with the Y direction of the negative electrode sheet 100.

Optionally, the second included angle θ₂ between the axis of the cylindrical magnetic field B2 and the Y direction of the negative electrode sheet 100 meets 45° ≤ θ₂ ≤ 70°. Specifically, the second included angle θ₂ may be 50°, 55°, 60°, 65°, or the like, with no limitation thereto.

Optionally, the second included angle θ₂ determines a size of the cross-sectional OI_{b}. The cross section is parallel to the Y direction and the Z direction. If the value of the cross-sectional OI_{b} is excessively large, expansion of the graphite mainly occurs in the X direction. If the value of the cross-sectional OI_{b} is excessively small, expansion mainly occurs in the Y direction. In both cases, expansion stress is excessively concentrated, which is not conducive to long-cycle performance of the graphite electrode sheet and may cause material shedding during cycling, leading to capacity decay.

Optionally, the square magnetic field B1 and the cylindrical magnetic field B2 can be used individually. Alternatively, the square magnetic field B1 and the cylindrical magnetic field B2 can be used simultaneously. When used simultaneously, the square magnetic field B1 and the cylindrical magnetic field B2 can be used in sections on the negative electrode sheet 100, or can be used alternately on the entire negative electrode sheet 100, or the like, with no limitation thereto.

Optionally, the square magnetic field B1 and the cylindrical magnetic field B2 are simultaneously applied to the entire negative electrode sheet 100 to regulate the included angles of the graphite particles 30 with the Z direction and the Y direction, respectively.

By applying the two different magnetic fields to the negative electrode sheet 100, the included angles of the graphite particles 30 with the Z direction and the Y direction can be respectively regulated, so that the graphite particles 30 are directionally arranged.

Optionally, after applying the magnetic field to the negative electrode sheet 100, the method further includes: baking the negative electrode sheet 100 at a baking temperature of T, satisfying: 80 °C ≤ T ≤ 140°C.

Optionally, areal density of the negative electrode sheet 100 is C, and compaction density of the negative electrode sheet 100 is D, satisfying: 140 g/m² ≤ C ≤ 300 g/m², 1.1 g/cm³ ≤ D ≤ 1.8 g/cm³.

Optionally, the baking temperature T may be 80°C, 100°C, 120°C, or the like, the areal density C may be controlled to 225 g/m², 230 g/m², 235 g/m² or the like, and the compaction density D may be controlled to 1.5 g/cm³, 1.6 g/cm³, 1.7 g/cm³ or the like, with no limitation thereto.

It may be understood that coating areal density of the negative electrode sheet 100 significantly affects fast-charging performance of the lithium-ion battery. As the areal density of the negative electrode sheet 100 increases, ionic and electronic impedances of the electrode sheet increase, leading to an increased internal resistance and decreased fast-charging and cycle performance. Therefore, choosing appropriate areal density is necessary to both reduce the internal resistance of the battery and ensure specific discharge capacity and cycle performance of the battery.

A lithium ion deintercalation and intercalation process is closely related to the compaction density of the negative electrode sheet 100. On the one hand, as the compaction density of the electrode sheet increases, contact between particles of the negative electrode active material gradually tightens, an electronic conductive network in the electrode sheet is improved, and the internal resistance is reduced. However, if the compaction density is excessively high, the electrode sheet may rebound during cycling, breaking contact chains of the conductive agent and the binder with the negative electrode active material, resulting in mutual separation of the particles of the negative electrode active material, thereby increasing charge transfer resistance and consequently deteriorating the rate performance and cycle performance of the battery. On the other hand, increasing the compaction density of the negative electrode sheet 100 may also continuously reduce porosity in the electrode sheet, resulting in a continuous decrease in electrolyte retention in the electrode sheet, a decrease in ionic conductivity of the electrode sheet, and an increase in the internal resistance of the battery. Therefore, choosing appropriate compaction density is necessary to both reduce the rebound of the negative electrode sheet 100 and ensure power performance of the battery.

By baking the negative electrode sheet 100 after applying the electric field and the magnetic field for regulation, the negative electrode sheet 100 that meets the foregoing parameters can be obtained, thereby optimizing specific discharge capacity, cycle performance, and power performance of the battery.

The technical solutions of this invention will be further described in detail below with reference to specific examples.

### Example 1

A negative electrode sheet in this example includes a current collector and an active layer, where the current collector is made of copper foil, and the copper foil is coated with slurry to form the active layer. The slurry includes materials such as graphite, a conductive agent, a binder, a stabilizer, and water.
1) Coating: the slurry is coated onto the copper foil along a length direction using a continuous coating device.
2) Regulation: an alternating electric field with a voltage of 36 V and a frequency of 50 Hz, and a magnetic field with a magnitude of 0.4 T to the copper foil current collector to induce a directional arrangement of graphite. A first included angle between a square magnetic field and a thickness direction of the negative electrode sheet is θ₁ = 90°, and a second included angle between a cylindrical magnetic field and a length direction of the electrode sheet is θ₂ = 60°, maintaining the magnetic field uniform and stable.
3) Baking: a baking temperature is 100°C, areal density is adjusted to be 230 g/m², and compaction density is controlled to be 1.6 g/cm³.

### Example 2

A battery in this example includes a negative electrode sheet, a positive electrode sheet, and a separator. This example differs from Example 1 in that the magnitude of the magnetic field is 0.8 T.

### Example 3

A battery in this example includes a negative electrode sheet, a positive electrode sheet, and a separator. This example differs from Example 1 in that the voltage is 100 V.

### Example 4

A battery in this example includes a negative electrode sheet, a positive electrode sheet, and a separator. This example differs from Example 1 in that no cylindrical magnetic field is provided.

### Example 5

A battery in this example includes a negative electrode sheet, a positive electrode sheet, and a separator. This example differs from Example 4 in that no electric field is provided.

### Example 6

A battery in this example includes a negative electrode sheet, a positive electrode sheet, and a separator. This example differs from Example 5 in that the magnitude of the magnetic field is 0.6 T.

### Example 7

A battery in this example includes a negative electrode sheet, a positive electrode sheet, and a separator. This example differs from Example 5 in that the magnitude of the magnetic field is 0.8 T.

### Example 8

A battery in this example includes a negative electrode sheet, a positive electrode sheet, and a separator. This example differs from Example 1 in that no square magnetic field is provided.

### Example 9

A battery in this example includes a negative electrode sheet, a positive electrode sheet, and a separator. This example differs from Example 8 in that no electric field is provided.

### Example 10

A battery in this example includes a negative electrode sheet, a positive electrode sheet, and a separator. This example differs from Example 9 in that the magnitude of the magnetic field is 0.6 T.

### Example 11

A battery in this example includes a negative electrode sheet, a positive electrode sheet, and a separator. This example differs from Example 9 in that the magnitude of the magnetic field is 0.8 T.

### Example 12

A battery in this example includes a negative electrode sheet, a positive electrode sheet, and a separator. This example differs from Example 1 in that the voltage is 24 V.

### Example 13

A battery in this example includes a negative electrode sheet, a positive electrode sheet, and a separator. This example differs from Example 1 in that the voltage is 130 V.

### Example 14

A battery in this example includes a negative electrode sheet, a positive electrode sheet, and a separator. This example differs from Example 1 in that the magnitude of the magnetic field is 0.6 T.

### Example 15

A battery in this example includes a negative electrode sheet, a positive electrode sheet, and a separator. This example differs from Example 1 in that the magnitude of the magnetic field is 1.2 T.

### Example 16

A battery in this example includes a negative electrode sheet, a positive electrode sheet, and a separator. This example differs from Example 1 in that no electric field is provided.

### Example 17

A battery in this example includes a negative electrode sheet, a positive electrode sheet, and a separator. This example differs from Example 1 in that the frequency of the electric field is 100 Hz.

### Comparative Example 1

A battery in this example includes a negative electrode sheet, a positive electrode sheet, and a separator. This comparative example differs from Example 1 in that no magnetic field is provided.

### Comparative Example 2

A battery in this example includes a negative electrode sheet, a positive electrode sheet, and a separator. This comparative example differs from Example 1 in that no electric field and no magnetic field are provided.

### Comparative Example 3

A battery in this example includes a negative electrode sheet, a positive electrode sheet, and a separator. This comparative example differs from Example 1 in that θ₂ = 90°.

### Comparative Example 4

A battery in this example includes a negative electrode sheet, a positive electrode sheet, and a separator. This comparative example differs from Example 1 in that θ₁ = 30°.

### Comparative Example 5

A battery in this example includes a negative electrode sheet, a positive electrode sheet, and a separator. This comparative example differs from Example 1 in that θ₂ = 30°.

**Table 1 is a summary table of parameter settings for the foregoing Examples and Comparative Examples.**

| Test No. | Electric field | Magnetic field | θ₁ | θ₂ |
|---|---|---|---|---|
| Example 1 | 36 V, 50 Hz | 0.4 T | 90° | 60° |
| Example 2 | 36 V, 50 Hz | 0.8 T | 90° | 60° |
| Example 3 | 100 V, 50 Hz | 0.4 T | 90° | 60° |
| Example 4 | 36 V, 50 Hz | 0.4 T | 90° | - |
| Example 5 | - | 0.4 T | 90° | - |
| Example 6 | - | 0.6 T | 90° | - |
| Example 7 | - | 0.8 T | 90° | - |
| Example 8 | 36 V, 50 Hz | 0.4 T | - | 60° |
| Example 9 | - | 0.4 T | - | 60° |
| Example 10 | - | 0.6 T | - | 60° |
| Example 11 | - | 0.8 T | - | 60° |
| Example 12 | 24 V, 50 Hz | 0.4 T | 90° | 60° |
| Example 13 | 130 V, 50 Hz | 0.4 T | 90° | 60° |
| Example 14 | 36 V, 50 Hz | 0.6 T | 90° | 60° |
| Example 15 | 36 V, 50 Hz | 1.2 T | 90° | 60° |
| Example 16 | - | 0.4 T | 90° | 60° |
| Example 17 | 36 V, 100 Hz | 0.4 T | 90° | 60° |
| Comparative Example 1 | 36 V, 50 Hz | - | - | - |
| Comparative Example 2 | - | - | - | - |
| Comparative Example 3 | 36 V, 50 Hz | 0.4 T | 90° | 90° |
| Comparative Example 4 | 36 V, 50 Hz | 0.4 T | 30° | 90° |
| Comparative Example 5 | 36 V, 50 Hz | 0.4 T | 90° | 30° |

Electrochemical performance characterization and testing are performed on the negative electrode sheets prepared in Example 1 to Example 17 and Comparative Example 1 to Comparative Example 5:

OI value: the OI value of a graphite crystal structure is calculated by measuring peak intensity (peak integral area) of graphite (004) and peak intensity (peak integral area) of (110) in each electrode sheet through an XRD test of the electrode sheet. OIₐ is obtained by testing an XRD pattern of a surface of the electrode sheet, which can be used to characterize an included angle between a crystal plane of the graphite (004) and the Z direction. OI_{b} is obtained by testing an XRD pattern of a cross section of the electrode sheet, which can be used to characterize an included angle between the (004) plane of the graphite and the Y direction.

It will be noted that the OI value of the graphite crystal structure in this application is the OI value of the graphite in the negative electrode sheet. The OI value of a material in the electrode sheet reflects arrangement of the material in the electrode sheet. The OI value of the graphite in the electrode sheet is affected not only by the OI value of the graphite material itself but also by an electrode sheet manufacturing process.

Peeling force test: a transparent adhesive tape is evenly pasted on one side of the electrode sheet and one end is torn off and fixed to a test fixture. A tensile tester is used to measure a force required to peel the transparent adhesive tape off the electrode sheet, thereby evaluating a bonding strength between the graphite particles in the negative electrode sheet as well as between the graphite particles in the negative electrode sheet and the copper foil current collector. In this application, OIₐ significantly affects the peeling force. The smaller the OIₐ, the greater the peeling force.

Liquid-phase diffusion impedance test: an electrode sheet, a separator, and an electrode sheet are stacked to form a symmetrical battery. Alternating current impedance of the symmetrical battery is tested and analyzed at a frequency of 0.02 HZ to 200000 HZ and a voltage of 5 V, to serve as liquid-phase diffusion impedance.

Specifically, electrochemical impedance spectroscopy (EIS) is used to observe a change in impedance of an electrode system with a frequency of a sinusoidal wave after a small-amplitude sinusoidal potential signal at a specific frequency based on a reference potential is applied to the electrode sheet. Resulting spectra are then analyzed and fitted to obtain kinetic information about an electrode process and a structure of an electrode interface. Generally, a diffusion resistance value of lithium ions in an electrolyte can be obtained by fitting an equivalent circuit, which is used to characterize an internal impedance value of the battery.

Battery preparation and capacity ratio test method:
the battery in this embodiment further includes a separator and a positive electrode sheet.
4) The foregoing negative electrode sheet is cut into electrode sheets of appropriate size to match with positive electrode lithium iron phosphate electrode sheets of corresponding size and areal density of 500 g/m².
5) 1 mol of lithium salt-LiPF₆ is dissolved in 1 L of organic solvent (including ethylene carbonate and diethyl carbonate, in a volume ratio of 1:1) to obtain an electrolyte.
6) Under dew point conditions, the positive electrode sheet, the separator, and the negative electrode sheet obtained in step 4) are sequentially stacked, and the electrolyte is injected to assemble a pouch battery with a designed capacity of 2.0 Ah.

Capacity calibration: within a voltage range of 2.0 V to 3.8 V, the battery is tested with three cycles of 0.33C/0.33C charge/discharge, and a capacity of the last cycle is taken as the capacity of the battery.

50% SOC direct current internal resistance test: a state of charge of the foregoing pouch battery is adjusted to 50% SOC at 25°C, and then charged at 1.5C for 30s. A voltage drop of each pouch battery is recorded to calculate direct current impedance (DCIR).

Charge specific capacity ratio: after each battery is discharged at 0.1C at 25°C, charge specific capacities at different charging rates: 0.2C and 3C, are tested, with a voltage range of 2.0 V to 3.8 V. A ratio of the charge specific capacity at 3C to the charge specific capacity at 0.2C is calculated.

Cycle capacity retention at 45°C: at 45°C, the battery is separately charged and discharged at a constant current of 1C, with a 30-minute rest period between a charging process and a discharging process. A capacity retention rate of the battery after 500 cycles is recorded.

Electrochemical performance characterization is performed on the negative electrode sheet and the assembled battery including the negative electrode sheet. Table 2 summarizes characterization and testing results.

| Test No. | OIₐ | OI_{b} | Peeling force (N/25mm) | Resistivity (Ω*cm) | liquid-phase diffusion resistance (mΩ) | Charging DCIR*C (mΩ*Ah) | 3C/0.2C charge rate (%) | Cycle retention rate at 45°C (%) |
|---|---|---|---|---|---|---|---|---|
| Example 1 | 1.21 | 5.2 | 1.12 | 0.66 | 0.82 | 90.2 | 88.2 | 90.2 |
| Example 2 | 0.45 | 4.6 | 1.33 | 0.5 | 0.72 | 88.3 | 91.3 | 92.3 |
| Example 3 | 0.62 | 4.8 | 1.22 | 0.55 | 0.75 | 89.8 | 90.4 | 91.1 |
| Example 4 | 1.30 | 15 | 1.10 | 0.76 | 0.88 | 92.2 | 86.2 | 87.2 |
| Example 5 | 1.32 | 14.3 | 1.08 | 0.78 | 0.89 | 91.5 | 87.2 | 87.5 |
| Example 6 | 0.86 | 14.5 | 1.18 | 0.64 | 0.80 | 90.4 | 88.8 | 87.9 |
| Example 7 | 0.55 | 14.2 | 1.30 | 0.59 | 0.78 | 90.2 | 89.2 | 89.0 |
| Example 8 | 1.50 | 5.3 | 1.05 | 0.82 | 0.90 | 94.2 | 85.2 | 90.8 |
| Example 9 | 1.72 | 5.5 | 0.90 | 0.89 | 0.93 | 92.0 | 86.5 | 90.2 |
| Example 10 | 1.05 | 5.0 | 1.16 | 0.64 | 0.82 | 90.6 | 88.5 | 89.5 |
| Example 11 | 0.65 | 4.0 | 1.20 | 0.56 | 0.76 | 89.9 | 89.5 | 87.2 |
| Example 12 | 1.8 | 5.4 | 0.92 | 0.91 | 0.95 | 94.5 | 84.5 | 91.2 |
| Example 13 | 0.48 | 4.7 | 1.28 | 0.56 | 0.74 | 88.8 | 91.0 | 92.0 |
| Example 14 | 0.8 | 4.8 | 1.18 | 0.60 | 0.78 | 90.0 | 88.5 | 91.8 |
| Example 15 | 0.35 | 4.53 | 1.35 | 0.48 | 0.68 | 86.2 | 93.2 | 91.2 |
| Example 16 | 2.5 | 10.2 | 0.85 | 1.2 | 1.32 | 96.2 | 81.3 | 89.2 |
| Example 17 | 1.11 | 5.0 | 1.16 | 0.63 | 0.80 | 89.0 | 88.9 | 90.8 |
| Comparative Example 1 | 30.5 | 12.3 | 0.63 | 1.3 | 1.60 | 99.2 | 75.2 | 86.3 |
| Comparative Example 2 | 48.5 | 15.2 | 0.42 | 1.45 | 1.86 | 103.5 | 70.2 | 84.2 |
| Comparative Example 3 | 1.35 | 40.8 | 1.11 | 0.78 | 0.90 | 93.0 | 85.2 | 75.2 |
| Comparative Example 4 | 12.2 | 11.5 | 0.70 | 1.25 | 1.45 | 97.5 | 77.2 | 87.3 |
| Comparative Example 5 | 1.30 | 1.5 | 1.11 | 0.75 | 0.85 | 91.2 | 88.5 | 74.2 |

From the experimental results of Example 1 to Example 17, Comparative Example 1 and Comparative Example 2 in Table 1 and Table 2, it can be seen that applying the electric field and/or magnetic field to the negative electrode sheet can improve the bonding strength between the graphite particles as well as between the graphite particles and the copper foil current collector, reduce the resistivity and the liquid-phase diffusion impedance of the electrode sheet, and improve the lithium-ion intercalation/deintercalation efficiency in the electrode sheet, which is conducive to improving charge and discharge performance of the battery.

It can be seen from Example 1, Example 3, Example 12, and Example 13 in Table 1 and Table 2 that the strength of the applied electric field is preferably between 36 V and 130 V, and the stronger the applied electric field, the better the power performance of the battery. It can be seen from Example 1 and Example 17 that the frequency of the applied electric field is preferably between 50 Hz and 100 Hz, and the higher the frequency of the applied electric field, the better the power performance of the battery. It can be seen from Example 1, Example 2, Example 5 to Example 7, Example 9 to Example 11, Example 14, and Example 15 that whether the square magnetic field or the cylindrical magnetic field is applied alone, or the square magnetic field and the cylindrical magnetic field are applied simultaneously, the strength of the applied magnetic field is preferably between 0.6 T and 1.2 T, and the stronger the applied magnetic field, the better the power performance of the battery.

From experimental results of Example 1 and Comparative Example 3 to Comparative Example 5 in Table 1 and Table 2, it can be seen that when the same electric field and the same magnetic field are applied to the negative electrode sheet, an angle of the magnetic field may affect durability of the electrode. A smaller first included angle θ₁between the square magnetic field and the Z direction leads to a larger planar OIₐ value. The larger planar OIₐ value affects the lithium-ion intercalation/deintercalation efficiency in the electrode sheet, which in turn affects the liquid-phase diffusion capability of the lithium ions in the electrode and sheet, hindering reduction of the liquid-phase diffusion resistance. Furthermore, a smaller planar OIₐ value results in a higher charge rate. However, a change in the second included angle θ₂ between the cylindrical magnetic field and the Y direction may affect the value of cross-sectional OI_{b}.

If the value of the cross-sectional OI_{b} is excessively large or excessively small, expansion stress may be excessively concentrated, which is not conducive to long-cycle performance of the graphite electrode sheet and may cause material shedding during cycling, leading to capacity decay.

From experimental results of Example 1 to Example 17 and Comparative Example 1 to Comparative Example 5 in Table 1 and Table 2, it can be seen that applying the electric field and the magnetic field to the negative electrode sheet can significantly improve the performance of the electrode in various aspects. The stronger the strength of the magnetic field and the electric field, the better the electrode orientation adjustment effect and the better the power performance of the electrode. Furthermore, the angle of the magnetic field significantly affects the durability of the electrode and needs to be controlled within a specific range. In this way, the values of planar OIₐ and cross-sectional OI_{b} of the electrode sheet can be controlled within specific ranges, dispersing the expansion stress of the electrode sheet in the X and Y directions. This prevents stress concentration from causing active material peeling during cycling and reducing the cycle retention rate of the battery.

In the description of the embodiments of this application, it will be noted that the directional or positional relationships indicated by the terms "center", "upper", "lower", "left", "right", "vertical", "horizontal", "inner", "outer", and the like are based on the directional or positional relationships shown in the drawings, which is only for the purpose of facilitating the description of this application and simplifying the description, and is not intended to indicate or imply that the apparatuses or elements referred to must have specific directions, and be constructed and operated in specific directions. Therefore, these terms will not be construed as limiting this application.

The foregoing disclosure is merely a preferred embodiment of this application, and will not be construed as limiting the scope of the claims of this application. A person of ordinary skill in the art will understand that implementing all or part of the processes of the foregoing embodiment and making equivalent changes according to the claims of this application still fall within the scope of this application.

## Claims

1. A negative electrode sheet (100), comprising:
a current collector (10);
an active layer (20) stacked on at least one side of the current collector (10), the active layer (20) containing graphite, and
the graphite satisfying: 0 < OIₐ ≤ 5, 2 ≤ OI_{b} ≤ 20,
wherein OIₐ is a ratio of a peak area of a characteristic diffraction peak of a (004) plane of the graphite to a peak area of a characteristic diffraction peak of a (110) plane of the graphite obtained by performing an XRD test on a surface of the negative electrode sheet (100), and
OI_{b} is a ratio of a peak area of a characteristic diffraction peak of the (004) plane of the graphite to a peak area of a characteristic diffraction peak of the (110) plane of the graphite obtained by performing an XRD test on a cross section of the negative electrode sheet (100).

2. The negative electrode sheet (100) according to claim 1, wherein the graphite meets:0 < OIₐ ≤ 2, 2 ≤ OI_{b} ≤ 10.

3. A preparation method for a negative electrode sheet (100), comprising:
providing (S10) a current collector (10); and
stacking (S20) an active layer (20) on at least one side of the current collector (10), the active layer (20) containing graphite, and
the graphite satisfying: 0 < OIₐ ≤ 5, 2 ≤ OI_{b} ≤ 20,
wherein OIₐ is a ratio of a peak area of a characteristic diffraction peak of a (004) plane of the graphite to a peak area of a characteristic diffraction peak of a (110) plane of the graphite obtained by performing an XRD test on a surface of the negative electrode sheet (100), and
OI_{b} is a ratio of a peak area of a characteristic diffraction peak of the (004) plane of the graphite to a peak area of a characteristic diffraction peak of the (110) plane of the graphite obtained by performing an XRD test on a cross section of the negative electrode sheet (100).

4. The preparation method for a negative electrode sheet (100) according to claim 3, wherein stacking the active layer (20) on the current collector (10) comprises:
coating (S21) the current collector (10) with slurry, the slurry comprises graphite particles (30);
applying (S22) an alternating electric field to the negative electrode sheet (100) to induce a current in the active layer (20); and/or,
applying (S23) a magnetic field to the negative electrode sheet (100) to orient the graphite particles (30).

5. The preparation method for a negative electrode sheet (100) according to claim 4, wherein a voltage of the alternating electric field is U and frequency is F, satisfying: 0 V < U ≤ 400 V, 30 Hz ≤ F ≤ 150 Hz.

6. The preparation method for a negative electrode sheet (100) according to claim 5, wherein the voltage of the alternating electric field is U and the frequency is F, satisfying:24 V ≤ U ≤ 130 V, 50 Hz ≤ F ≤ 100 Hz.

7. The preparation method for a negative electrode sheet (100) according to claim 4, wherein a magnitude of the magnetic field is B, satisfying: 0 T < B ≤ 2 T.

8. The preparation method for a negative electrode sheet (100) according to claim 7, wherein the magnitude of the magnetic field is B, satisfying: 0.6 T ≤ B ≤ 1.2 T.

9. The preparation method for a negative electrode sheet (100) according to claim 7, wherein the magnetic field is a square magnetic field (B1), and a direction of the magnetic field forms a first included angle θ₁ with a thickness direction of the negative electrode sheet (100); and/or the magnetic field is a cylindrical magnetic field (B2), and a direction of the magnetic field forms a second included angle θ₂ with a length direction of the negative electrode sheet (100), satisfying: 45° ≤ θ₁ ≤ 90°, 45° ≤ θ₂ ≤ 80°.

10. The preparation method for a negative electrode sheet (100) according to claim 4, wherein after applying the magnetic field to the negative electrode sheet (100), the method further comprises: baking the negative electrode sheet (100) at a baking temperature of T, satisfying: 80°C ≤ T ≤ 140°C.

11. The preparation method for a negative electrode sheet (100) according to claim 4, wherein areal density of the negative electrode sheet (100) is C, and compaction density of the negative electrode sheet (100) is D, satisfying: 140 g/m² ≤ C ≤ 300 g/m², 1.1 g/cm³ ≤ D ≤ 1.8 g/cm³.

12. A battery cell, comprising a separator, a positive electrode sheet, and the negative electrode sheet (100) according to claim 1 or 2 or a negative electrode sheet (100) prepared by the preparation method for a negative electrode sheet (100) according to any one of claims 3 to 11, the positive electrode sheet, the separator, and the negative electrode sheet (100) being stacked.

13. A battery, comprising the battery cell according to claim 12.

14. The battery according to claim 13, further comprising a housing, the housing comprising a bottom plate and a plurality of side plates, the side plates being connected to the bottom plate and enclosing an accommodating cavity, the accommodating cavity having an opening at one end opposite to the bottom plate, and the battery cell being accommodated in the accommodating cavity.

15. The battery according to claim 14, further comprising a cover plate, the cover plate being connected to the opening of the housing, thereby closing the accommodating cavity.

16. An electrical device, comprising the battery cell according to claim 12.
